# EUROPEAN PATENT SPECIFICATION

(11) **EP 2 145 726 B1**
(45) Date of publication and mention of the grant of the patent: **06.07.2011**
(21) Application number: 09165842.7
(22) Date of filing: 17.07.2009
(51) Int. Cl.: B23Q 1/76

(54) **Hydrostatic bearing rest for a lathe, and method for controlling the temperature of a workpiece on such a lathe**
Hydrostatische Tragstütze für eine Drehmaschine und Verfahren zum Kontrollieren der Werkstücktemperatur auf einer solchen Drehmaschine
Palier hydrostatique pour un tour et procédure de contrôle de la temperature d`une pièce usinée par ledit tour

(30) Priority: 17.07.2008 IT TO20080548
(43) Date of publication of application: 20.01.2010
(73) Proprietor: ANSALDO ENERGIA S.P.A., 16152 Genova (IT)
(72) Inventor: Canepa, Mario, 16149 Genova (IT)
(74) Representative: Jorio, Paolo

(56) References cited:
- DE-A1- 3 909 411
- DATABASE WPI Thomson Scientific, London, GB; AN 1987-092263 XP002522274 -& SU 1 248 760 A (KRAMATORSKOE) 7 August 1986 (1986-08-07)
- DATABASE WPI Thomson Scientific, London, GB; AN 1985-085923 XP002522275 -& SU 1 114 512 A (KRAMATORSK Z TYAZHELOGO [SU]) 23 September 1984 (1984-09-23)
- DATABASE WPI Thomson Scientific, London, GB; AN 1981-D8148D XP002522276 -& SU 755 493 A (KRAMATORSK Z TYAZHELOGO [SU]) 25 August 1980 (1980-08-25)
- DATABASE WPI Thomson Scientific, London, GB; AN 1979-E8525B XP002522277 -& SU 617 233 A (GROMOVIK ANATOLIJ [SU]; SOVPEL VIKTOR V; GREBENYUK IRINA K) 30 June 1978 (1978-06-30)

## Description

The present invention relates to a hydrostatic bearing rest for a lathe.

Using one or more hydrostatic bearing rests for supporting some types of pieces to be machined on a lathe, e.g. to support a turbine rotor, is known, e.g. from DE-A-3909411, which shows the features of the preamble of claim 1.

When machining the turbine rotor, a considerable heating of the parts being machined is observed at the bearing seat or journal.

Such a heating is due not only to the machining by chip removing but also to the pressure of the hydrostatic liquid bearing the rest. Indeed, such a pressure must have high values to make the rotor correctly "float", because the axial length of the borne rotor surface is relatively short.

The heat of the bearing liquid tends to increase the temperature of the borne rotor surface. From here, the heat is transmitted by thermal conduction to the adjacent parts being machined, which excessively expand, with consequent high risks of machining inaccuracies.

Furthermore, during machining, dimensional checks are carried out to verify that the bearing seat or journal has the required size and tolerances. Due to the high temperatures, before carrying out each check, the operators must cool the rotor down, normally by blowing air, with consequent waiting downtimes.

Furthermore, if the final accuracy obtained is not satisfactory, grinding is required, with further increase of the machining times.

It is the object of the present invention to provide a hydrostatic bearing rest for a lathe, which allows to simply and cost-effectively solve the aforementioned problems.

A hydrostatic bearing rest for a lathe is provided according to the present invention, the rest having:
- an upper seat for a workpiece, and
- at least a first passage for a liquid that defines, in use, a hydrostatic bearing for said workpiece;
characterized by having at least a second passage for a coolant; said second passage being different from said first passage.

Moreover, according to the present invention, a lathe is provided as defined in claim 7.

Furthermore, according to the present invention, a method for controlling the temperature of a workpiece on a lathe is provided, as defined in claim 9.

The invention will now be described with reference to the accompanying drawings which illustrate a non-limitative embodiment thereof, in which:
- figure 1 is a perspective view of a preferred embodiment of the hydrostatic bearing rest for a lathe, according to the present invention; and
- figure 2 is a top view of the rest in figure 1, with parts removed for clarity and on enlarged scale.

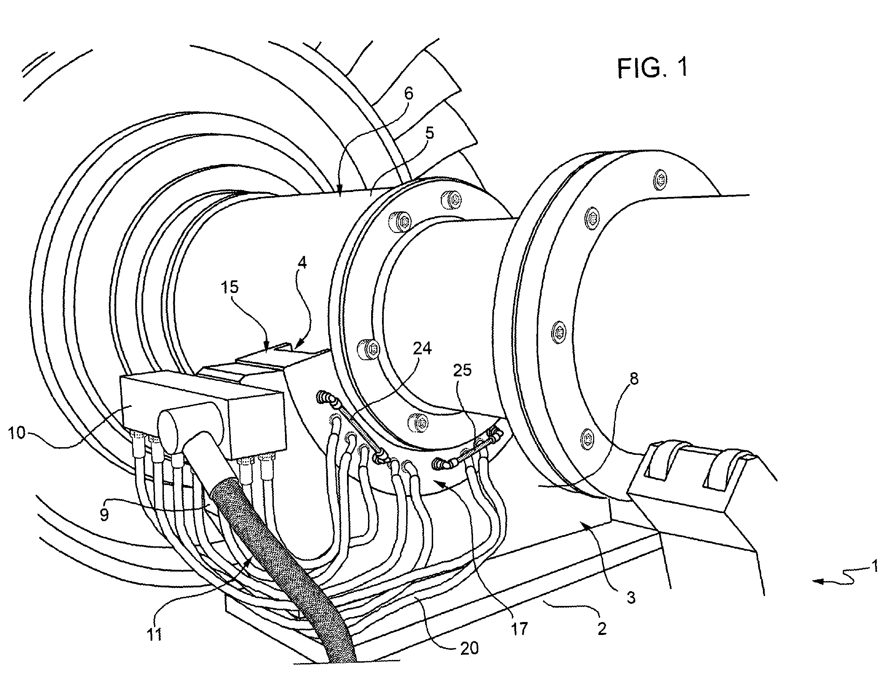

In figure 1, numeral 1 indicates as a whole a lathe (partially shown) comprising a bed 2 on which a rest 3 is arranged. The rest 3 defines an upper seat 4 engaged by a cylindrical portion 5 of a piece 6 to be machined by chip removal. In the particular example shown, the workpiece 6 is defined by a turbine rotor.

The rest 3 comprises a lower base 8, which is connected in a fixed position to the bed 2 and, on a side thereof 9, carries a distributor 10 forming part of a hydraulic system 11 (partially shown). The system 11 feeds a pressurized liquid to the rest 3 for hydrostatically bearing the portion 5.

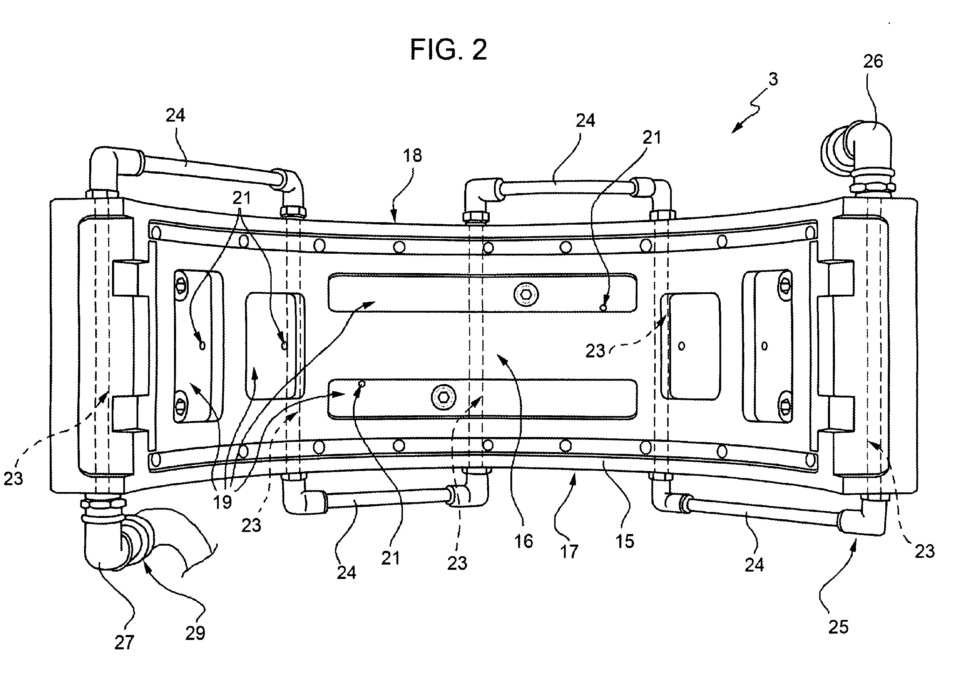

The rest 3 further comprises a lining body 15, generally referred to as "liner", which is laid over the base 8 and fixed to the base 8 by means of screws (shown in figure 2). The body 15 is preferably made of bronze, is substantially semicylinder-shaped so as to define the seat 4, and is delimited by an upper surface 16, with an arched profile complementary to the cylindrical profile of the portion 5; by a frontal face 17; and by a rear face 18 (figure 2).

With reference to figure 2, surface 16 has a series of recesses 19, which receive the bearing liquid from the distributor 10 through pipes 20 (figure 1) and passages 21 inside the body 15.

The body 15 has a plurality of inner, rectilinear, parallel passages 23, the ends of which lead along the faces 17,18 and are put into communication to one another by fittings 24 outside the body 15 and fixed to the body 15 itself. Fittings 24 and passages 23 thus form a serpentine-like circuit 25, which has an inlet 26 and an outlet 27 defined by respective fittings and forms parts of a cooling system (partially shown) provided to remove heat from the body 15. In particular, the system 29 comprises a pressure pump (not shown) independent from the pressure pump of the system 11; and a heat exchanger or refrigerator (not shown), which forms part of the machine tool which machines the workpiece 6 and lowers the temperature of the coolant which circulates in the system 29 before making the coolant itself pass through the passages 23.

In order to avoid condensation and dissipation, the pressure and return pipes in the system 29 are insulated in a not shown manner.

The following method is carried out for controlling the temperature of a workpiece 6:
- the initial temperature of workpiece 6 or environment is measured before machining;
- the system 11 is started, so as to hydrostatically bear the portion 5, without slipping on the surface 16;
- the rotation of the workpiece 6 is started up by means of known machine tool controls;

- the temperature of the workpiece 6 is measured during machining;
- the system 29 is started up so as to remove heat from the body 15; and
- the coolant flow rate in the system 29 is adjusted during machining according to the measured temperature, so as to keep the measured temperature during machining substantially equal to the initial temperature.

By removing heat from the body 15 by means of the coolant, it is possible to remove heat from the bearing liquid in the recesses 19 and therefore from the portion 5 during machining, thus limiting or even eliminating thermal expansion in the adjacent zones of the workpiece 6 being machined.

For this reason, it is apparent that the rest 3 allows to obtain a highly accurate machining without needing additional machining and without waste.

Furthermore, the machining times are free from downtimes and thus may be provided and programmed in a relatively simple manner. In particular, it is not necessary to wait for the workpiece 6 to cool down before carrying out dimensional checks.

Furthermore, the circuit 25 is highly simple to be implemented by virtue of the particular arrangement of passages 23.

Finally, from the above, it is apparent that changes and variations may be made to the rest 3 without departing from the scope of protection of the present invention, as defined in the appended claims.

In particular, the position and development of the passages 23 could be different from those shown by way of example.

## Claims

1. A hydrostatic bearing rest (3) for a lathe (1), the rest having:
- an upper seat (4) for a workpiece, and
- at least a first passage (21) for a liquid that defines, in use, a hydrostatic bearing for said workpiece;
**characterized by** having at least a second passage (23) for a coolant; said second passage (23) being different from said first passage (21).

2. The rest according to claim 1, **characterized in that** the ends of said second passage (23) exit along a front face (17) and a rear face (18) of the rest (3).

3. The rest according to claim 1, **characterized by** comprising:
- a bottom fastening body (8), and
- an upper body (15), that defines said upper seat (4) and said first passage (21) and is fixed to said bottom fastening body (8);
and **characterized in that** said second passage (23) is at least partially bounded by said upper body (15).

4. The rest according to claim 3, **characterized in that** said second passage (23) is made inside said upper body (15).

5. The rest according to claim 4, **characterized by** comprising a plurality of second passages that are put in communication one another by fittings (24) placed outside of said upper body (15) and fixed to said upper body (15).

6. The rest according to claim 5, **characterized in that** said second passages are parallel channels that extend from a front face (17) to a back face (18) of said upper body (15).

7. A lathe (1) **characterized by** comprising:
- a rest (3) according to any one of the previous claims;
- a first hydraulic system (29) for circulating said coolant; and
- a second hydraulic system (11) for supplying the bearing liquid.

8. The lathe according to claim 7, **characterized in that** said first and second hydraulic systems (29,11) comprise respective pressure pumps, that are independent one from the other.

9. A method for controlling the temperature of a workpiece on a lathe made according to claims 7 or 8; the method being **characterized by** comprising the steps of:
- starting up said second hydraulic system (11);
- starting up the rotation of the said workpiece;
- starting up said first hydraulic system (29);
- setting the flow rate of said coolant in said first hydraulic system (29) so as to keep the temperature of said workpiece substantially constant.

10. The method according to claim 9, **characterized by** comprising the steps of measuring the temperature of said workpiece during machining and adjusting the flow rate of the coolant during the machining of said workpiece as a function of the measured temperature.

11. The method according to claim 10, **characterized by** comprising the step of measuring an initial temperature of the said workpiece or of the environment before the machining, and **characterized in that** the adjustment of the flow rate of the coolant is carried out so as to keep the measured temperature during the machining process substantially at the initial temperature.

## Patentansprüche

1. Hydrostatische Lagerstütze (3) für eine Drehmaschine (1), wobei die Stütze enthält:
- einen oberen Sitz (4) für ein Werkstück und
- wenigstens einen ersten Kanal (21) für eine Flüssigkeit, die im Gebrauch ein hydrostatisches Lager für das Werkstück definiert;
**gekennzeichnet durch** wenigstens einen zweiten Kanal (23) für ein Kühlmittel; wobei der zweite Kanal (23) von dem ersten Kanal (21) verschieden ist.

2. Stütze nach Anspruch 1, **dadurch gekennzeichnet, dass** die Enden des zweiten Kanals (23) längs einer vorderen Fläche (17) und einer hinteren Fläche (18) der Stütze (3) austreten.

3. Stütze nach Anspruch 1, **gekennzeichnet durch**:
- einen unteren Befestigungskörper (8) und
- einen oberen Körper (15), der den oberen Sitz (4) und den ersten Kanal (21) definiert und an dem unteren Befestigungskörper (8) befestigt ist;
und **dadurch gekennzeichnet, dass** der zweite Kanal (23) wenigstens teilweise **durch** den oberen Körper (15) begrenzt ist.

4. Stütze nach Anspruch 3, **dadurch gekennzeichnet, dass** der zweite Kanal (23) in dem oberen Körper (15) ausgebildet ist.

5. Stütze nach Anspruch 4, **gekennzeichnet durch** mehrere zweite Kanäle, die **durch** Anschlussstücke (24), die außerhalb des oberen Körpers (15) angeordnet sind und am oberen Körper (15) befestigt sind, miteinander kommunizieren.

6. Stütze nach Anspruch 5, **dadurch gekennzeichnet, dass** die zweiten Kanäle parallele Kanäle sind, die sich von einer vorderen Fläche (17) zu einer hinteren Fläche (18) des oberen Körpers (15) erstrecken.

7. Drehmaschine (1), **gekennzeichnet durch**:
- eine Stütze (3) nach einem der vorhergehenden Ansprüche;
- ein erstes Hydrauliksystem (29), um das Kühlmittel umzuwälzen; und
- ein zweites Hydrauliksystem (11), um die Lagerflüssigkeit zu liefern.

8. Drehmaschine nach Anspruch 7, **dadurch gekennzeichnet, dass** das erste und das zweite Hydrauliksystem (29, 11) jeweilige Druckpumpen enthalten, die voneinander unabhängig sind.

9. Verfahren zum Steuern der Temperatur eines Werkstücks auf einer Drehmaschine nach den Ansprüche 7 oder 8; wobei das Verfahren **gekennzeichnet ist durch** die folgenden Schritte:
- Hochfahren des zweiten Hydrauliksystems (11);
- Hochfahren der Drehung des Werkstücks;
- Hochfahren des ersten Hydrauliksystems (29);
- Einstellen der Durchflussmenge des Kühlmittels in das erste Hydrauliksystem (29), um die Temperatur des Werkstücks im Wesentlichen konstant zu halten.

10. Verfahren nach Anspruch 9, **gekennzeichnet durch** die Schritte des Messens der Temperatur des Werkstücks während der maschinellen Bearbeitung und des Einstellens der Durchflussmenge des Kühlmittels während der maschinellen Bearbeitung des Werkstücks als Funktion der gemessenen Temperatur.

11. Verfahren nach Anspruch 10, **gekennzeichnet durch** den Schritt des Messens der Anfangstemperatur des Werkstücks oder der Umgebung vor dem maschinellen Bearbeiten, und **dadurch gekennzeichnet, dass** das Einstellen der Durchflussmenge des Kühlmittels in der Weise ausgeführt wird, dass die gemessene Temperatur während des Prozesses des maschinellen Bearbeitens im Wesentlichen auf der Anfangstemperatur gehalten wird.

## Revendications

1. Lunette de support hydrostatique (3) pour un tour (1), la lunette comprenant :
- une assise supérieure (4) pour une pièce à usiner, et
- au moins un premier passage (21) pour un liquide qui définit, en utilisation, un support hydrostatique pour ladite pièce à usiner ;
**caractérisée en ce qu'**elle comporte au moins un second passage (23) pour un liquide de refroidissement ; ledit second passage (23) étant distinct dudit premier passage (21).

2. Lunette selon la revendication 1, **caractérisée en ce que** les extrémités dudit second passage (23) sortent le long d'une face avant (17) et d'une face arrière (18) de la lunette (3).

3. Lunette selon la revendication 1, **caractérisée en ce qu'**elle comprend :
- un corps de fixation inférieur (8), et
- un corps supérieur (15), qui définit ladite assise supérieure (4) et ledit premier passage (21) et est fixé audit corps de fixation inférieur (8) ;
et **caractérisée en ce que** ledit second passage (23) est au moins partiellement délimité par ledit corps supérieur (15).

4. Lunette selon la revendication 3, **caractérisée en ce que** ledit second passage (23) est réalisé à l'intérieur dudit corps supérieur (15).

5. Lunette selon la revendication 4, **caractérisée en ce qu'**elle comprend une pluralité de seconds passages qui communiquent entre eux grâce à des raccords (24) placés à l'extérieur dudit corps supérieur (15) et fixés audit corps supérieur (15).

6. Lunette selon la revendication 5, **caractérisée en ce que** lesdits seconds passages sont des canaux parallèles qui s'étendent d'une face avant (17) jusqu'à une face arrière (18) dudit corps supérieur (15).

7. Tour (1) **caractérisé en ce qu'**il comprend :
- une lunette (3) selon l'une quelconque des revendications précédentes ;
- un premier système hydraulique (29) pour faire circuler ledit liquide de refroidissement ; et
- un second système hydraulique (11) pour alimenter le liquide porteur.

8. Tour selon la revendication 7, **caractérisé en ce que** lesdits premier et second systèmes hydrauliques (29, 11) comprennent des pompes de pression respectives, qui sont indépendantes les unes de autres.

9. Procédé de commande de température d'une pièce d'usinage sur un tour réalisé selon les revendications 7 ou 8 ; le procédé est **caractérisé en ce qu'**il comprend les étapes consistant à :
- démarrer ledit second système hydraulique (11) ;
- lancer la rotation de ladite pièce à usiner ;
- démarrer ledit premier système hydraulique (29) ;
- régler le débit dudit liquide de refroidissement dans ledit premier système hydraulique (29) de manière à garder la température de ladite pièce à usiner sensiblement constante.

10. Procédé selon la revendication 9, **caractérisé en ce qu'**il comprend les étapes de mesure de la température de ladite pièce à usiner pendant l'usinage et de réglage du débit du liquide de refroidissement pendant l'usinage de ladite pièce à usiner en fonction de la température mesurée.

11. Procédé selon la revendication 10, **caractérisé en ce qu'**il comprend l'étape de mesure d'une température initiale de ladite pièce à usiner ou de l'environnement ambiant avant l'usinage, et **caractérisé en ce que** le réglage du débit du liquide de refroidissement est réalisé de manière à maintenir la température mesurée pendant le processus d'usinage pratiquement à la température initiale.
